# EUROPEAN PATENT SPECIFICATION

(11) **EP 3 830 380 B1**
(45) Date of publication and mention of the grant of the patent: **18.06.2025**
(21) Application number: 19845426.6
(22) Date of filing: 01.08.2019
(51) Int. Cl.: C22C 1/10, C22C 26/00, B22F 5/00

(54) **CUTTING TOOL WITH PCD INSERTS, SYSTEMS INCORPORATING SAME AND RELATED METHODS**
SCHNEIDWERKZEUG MIT PCD-EINSÄTZEN, SYSTEME DAMIT UND ENTSPRECHENDE VERFAHREN
OUTIL DE COUPE À INSERTS DE DIAMANT POLYCRISTALLIN, SYSTÈMES LES INCORPORANT ET PROCÉDÉS ASSOCIÉS

(30) Priority: 02.08.2018 US 201862713862 P
(43) Date of publication of application: 09.06.2021
(73) Proprietor: US Synthetic Corporation, Orem, UT 84058 (US)
(72) Inventor: BURTON, Regan Leland, Saratoga Springs, Utah 84045 (US); BAGLEY, Ronald D., Hidden Valley, Pennsylvania 15502 (US); JENSEN, Kenneth Max, Mapleton, Utah 84664 (US)
(74) Representative: Evens, Paul Jonathan
(86) International application number: PCT/US2019/044666
(87) International publication number: WO 2020/028663

(56) References cited:
- EP-B1- 1 190 791
- US-A- 5 303 787
- US-A- 5 429 199
- US-A1- 2002 034 425
- US-A1- 2010 028 098
- US-A1- 2014 239 051
- US-A1- 2014 348 452
- US-A1- 2015 151 362
- US-B1- 10 408 057
- US-B1- 8 783 380
- US-B1- 9 403 260
- US-B2- 10 392 866
- US-B2- 10 400 516
- US-B2- 9 771 760

## Description

### BACKGROUND

This application claims the benefit of U.S. Provisional Patent Application No. 62/713,862, filed on Aug. 2, 2018, entitled CUTTING TOOL WITH PCD INSERTS, SYSTEMS INCORPORATING SAME AND RELATED METHODS.

### BACKGROUND

Cutting tools are conventionally used in machining operations to remove material and form desired shapes and surfaces of a given object. For example, milling is a machining process wherein material is progressively removed in the form of "chips" to form a shape or surface from a given volume of material - often referred to as a workpiece. This may be accomplished by feeding the work piece into a rotating cutting tool (or *vice-versa*), often in a direction that is perpendicular to the axis of rotation of the cutting tool. Various types of cutters may be employed in milling operations, but most cutting tools include a body and one or more teeth (or cutting elements - which may be brazed or mechanically attached to the body) that cut into and remove material from the workpiece as the teeth of the rotating cutter engage the workpiece.

Nearly any solid material may be machined, including metals, plastics, composites and natural materials. Some materials are more easily machined than other types of materials, and the type of material being machined may dictate, to a large extent, the process that is undertaken to machine the workpiece, including the choice of cutting tool. For example, titanium and titanium alloys, while exhibiting a number of desirable mechanical and material characteristics, are notoriously difficult to machine.

While there are numerous reasons for the difficulty in milling titanium materials, some of them not entirely understood, some reasons may include its high strength, chemical reactivity with cutter materials, and low thermal conductivity. These characteristics tend to reduce the life of the cutter. Additionally, the relatively low Young's modulus of titanium materials is believed to lead to "chatter" in the cutting tool, often resulting in a poor surface finish of a machined workpiece. Further, the "chips" that are typically formed in machining processes such as milling are not typically small broken chips but, rather, long continuous chips which can become tangled in the machinery, posing a safety hazard and making it difficult to conduct automatic machining of titanium materials.

While there have been various attempts to provide cutting tools that provide desirable characteristics for machining various materials, including normally difficult-to-machine materials such as titanium, there is a continued desire in the industry to provide improved cutting tools for machining of a variety of materials and for use in a variety of cutting processes.

US 2014/239051 A1 discloses a cutting tool.

### SUMMARY

Embodiments of the invention relate to cutting tools that may be used in the machining of various materials. The cutting tool of the present invention is defined in claim 1.

In one embodiment, the superhard table exhibits a density of at least 95 volume percent of polycrystalline diamond.

In one embodiment, superhard table exhibits a density of at least 98 volume percent of polycrystalline diamond.

In one embodiment, the table is not bonded to a substrate.

In one embodiment, the polycrystalline diamond exhibits an average grain size of approximately 12 µm or less. Additionally, a metal-solvent catalyst may be present in at least some interstitial regions of the polycrystalline diamond in an amount greater than approximately 7 percent by weight. In one embodiment, the metal-solvent catalyst comprises cobalt.

In one embodiment, the polycrystalline diamond exhibits an average grain size of approximately 20 µm or greater. Additionally, a metal-solvent catalyst may be present in at least some interstitial regions of the polycrystalline diamond in an amount less than approximately 7 percent by weight. In one embodiment, the metal-solvent catalyst comprises cobalt.

In one embodiment, the table exhibits a thickness of at least 5.08 x 10-3 m (0.2 inches).

In one embodiment, the table comprises a polycrystalline diamond table having: a plurality of diamond grains exhibiting diamond-to-diamond bonding therebetween and defining a plurality of interstitial regions; a metal-solvent catalyst occupying at least a portion of the plurality of interstitial regions, wherein the plurality of diamond grains and the metal-solvent catalyst collectively exhibit a coercivity of about 115 Oersteds ("Oe") to about 175 Oe; and wherein the plurality of diamond grains and the metal-solvent catalyst collectively exhibit a specific magnetic saturation of about 10 Gauss·cm³/grams ("G·cm³/g") to about 15 G·cm³/g.

In one embodiment, the body comprises aluminum.

A method as defined in claim 9 is provided for removing material from a workpiece. The method comprises: providing a cutting tool as described above; rotating the cutting tool about an axis; and engaging a workpiece with rotating cutting tool.

In one embodiment, engaging a workpiece includes engaging a workpiece comprising titanium.

In one embodiment, providing the cutting element comprising a superhard table includes sintering a volume of diamond particles a high-pressure, high-temperature (HPHT) to form a plurality of diamond grains exhibiting diamond-to-diamond bonding therebetween.

In one embodiment, sintering a volume of diamond particles includes infiltrating at least some interstitial spaces between the diamond grains with a metal-solvent catalyst.

In one embodiment, the method further includes forming a catalyst depleted region in the table by removing at least some of the metal-solvent catalyst from interstitial spaces.

In one embodiment, infiltrating at least some interstitial spaces between the diamond grains with a metal-solvent catalyst includes infiltrating with a cobalt material.

In one embodiment, providing the table includes providing a volume of polycrystalline diamond that exhibits an average grain size of approximately 12 µm or less and wherein a metal-solvent catalyst is present in at least some interstitial regions of the polycrystalline diamond in an amount greater than approximately 7 percent by weight.

In one embodiment, providing the table includes providing a volume of polycrystalline diamond that exhibits an average grain size of approximately 20 µm or greater and wherein a metal-solvent catalyst is present in at least some interstitial regions of the polycrystalline diamond in an amount less than approximately 7 percent by weight.

In one embodiment, providing the cutting element comprising a superhard table includes providing a table that exhibits a thickness of at least 5.08 x 10⁻³ m (0.2 inches).

In one embodiment, providing the cutting element comprising a superhard table includes providing a polycrystalline diamond table that exhibits approximately 95 volume percent diamond or greater.

In accordance with another embodiment, a cutting tool comprising a body, at least one cutting element associated with the body, the at least one cutting element consisting essentially of a polycrystalline diamond table exhibiting a thickness of at least approximately 3,8 x 10⁻³ m (0.15 inch)

In one embodiment, the at least one cutting element is formed of a material comprising at least approximately 95 volume percent diamond.

In one embodiment, the diamond table is at least approximately 98 volume percent diamond.

Various elements, components, features or acts of one embodiment described herein may be combined with elements, components, features or acts of other embodiments without limitation.

### BRIEF DESCRIPTION OF THE DRAWINGS

The drawings illustrate various embodiments of the invention, wherein common reference numerals refer to similar, but not necessarily identical, elements or features in different views or embodiments shown in the drawings.
FIG. 1 is a schematic drawing showing a milling operation according to one embodiment of the present disclosure;
FIG. 2 is a schematic drawing showing a milling operation according to another embodiment of the present disclosure;
FIGS. 3 and 4 are perspective and side views of a cutting tool in accordance with an embodiment of the present disclosure;
FIGS. 5 and 6 are top and side views of a cutting insert according to an embodiment of the present disclosure;
FIG. 7 is a cross-sectional view taken along lines 7-7 as indicated in FIG. 6;
FIGS. 8A and 8B are enlarged views of a portion of the insert shown in FIG. 7 according to embodiments of the present disclosure;
FIG. 9 is a side view of a cutting insert according to an embodiment of the present disclosure;
FIG. 10 is a cross-sectional view taken along lines 10-10 as indicated in FIG. 9;
FIGS. 11A-11C are enlarged views of a portion of the insert shown in FIG. 10 according to embodiments of the present disclosure;
FIG. 12 is a cross-section view, similar to the view shown in FIG. 10, according to another embodiment of the present disclosure.

### DESCRIPTION OF THE EMBODMENTS

Embodiments of the disclosure relate to cutting tools that may be used in machining processes, including milling, drilling, turning as well as variations and combinations thereof. The cutting tools may be used in shaping, forming and finishing a variety of different materials, including materials that are often difficult to machine, including, for example, titanium, titanium alloys and nickel based materials.

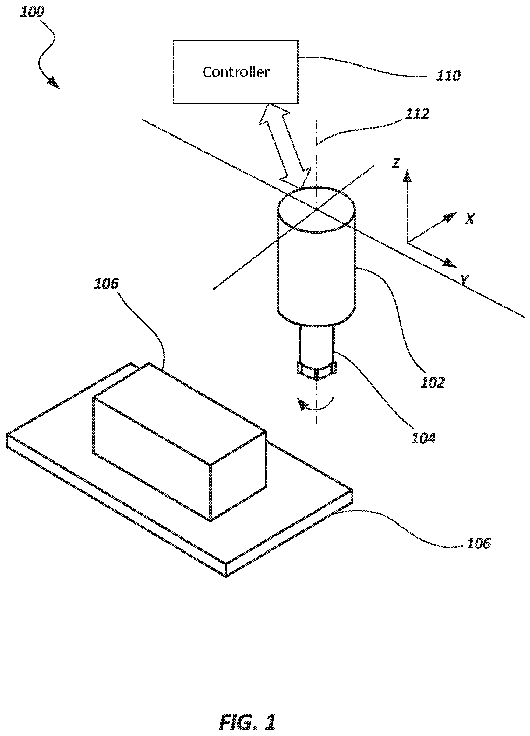

Referring to FIG. 1, an example of the operation of a vertical milling machine (VMM) 100 is schematically shown. The VMM 100 includes a spindle 102 having a cutting tool 104 removably coupled therewith in accordance with an embodiment of the present disclosure. The VMM 100 also includes a table 106 on which a workpiece 108 is placed. A CNC (computer numerically controlled) controller 110 is in communication with the spindle 102 and may control the action of the spindle 102. While not expressly shown in FIG. 1, a frame may couple several of the components together (*e.g.,* the spindle 102 and the table 106). The spindle 102 is configured to rotate the cutting tool 104 about an axis 112 and to also move the cutting tool 104 in the X, Y and Z directions relative to the table 106 and associated workpiece 108.

As noted above, the controller 110 is in communication with the spindle 102 and configured to control various operations of the VMM 100. For example, the controller 110 may be configured to control the rotational speed of the cutting tool 104 and also move the spindle 102 (and, thus, the cutting tool 104) in specified directions along the X-Y-Z axes at a desired "feed rate" relative to the workpiece 108. Thus, the controller 110 may enable the cutting tool 104 to remove material from the workpiece 108 so as to shape it and provide a desired surface finish to the workpiece 108 as will be appreciated by those of ordinary skill in the art.

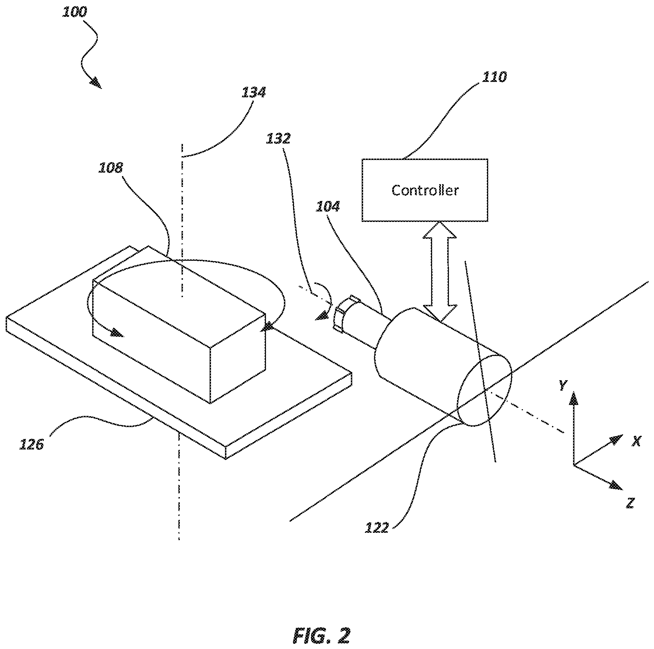

Referring to FIG. 2, an example of the operation of a horizontal milling machine (HMM) 120 is schematically shown. The HMM 120 includes a spindle 122 having a cutting tool 104 removably coupled therewith in accordance with an embodiment of the present disclosure. The HMM 120 also includes a table 126 on which a workpiece 108 is placed. The table 126 may be vertically oriented. A CNC controller 110 is in communication with the spindle 102 and controls the action of the spindle 122. In one embodiment, the controller 110 may also be in communication with the table 126 and/or spindle 122 to displace one or both in a desired direction, respectively, as discussed below. While not expressly shown in FIG. 2, a frame may couple several of the components together (*e.g.,* the spindle 122 and the table 126). The spindle 122 is configured to rotate the cutting tool 104 about an axis 132 and to also move the cutting tool 104 in the X, Y and Z directions relative to the table 126 and the associated workpiece 108. Additionally, the table 126 may be configured to rotate about a B-axis 134, which is substantially orthogonal to the rotational axis 132. In one embodiment, the controller 110 may be configured to control the rotational speed of the cutting tool 104, displace the spindle 102 (and, thus, the cutting tool 104) in a specified direction and at a desired "feed rate" relative to the workpiece 108, and also rotate the table 126 (and thus the workpiece 108). Thus, the controller 110 may enable the cutting tool 104 to remove material from the workpiece 108 so as to shape it and provide a desired surface finish to the workpiece 108 as will be appreciated by those of ordinary skill in the art.

It is noted that the milling machines 100 and 120 described with respect to FIGS. 1 and 2 are merely examples, and that a variety of other machining systems are contemplated as incorporating a cutting tool such as is described in further detail below for use in a variety of machining operations.

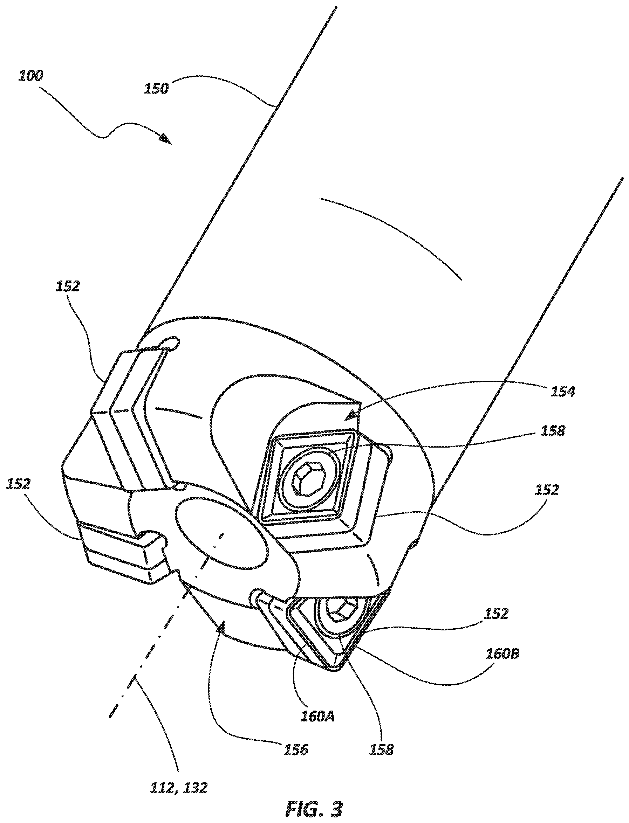

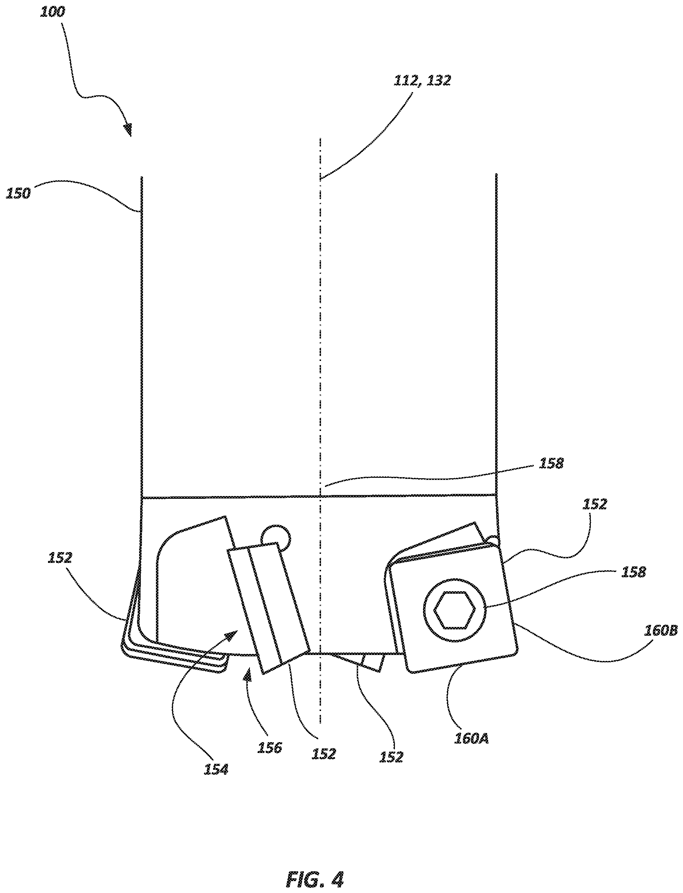

Referring now to FIGS. 3 and 4, a cutting tool 104 is shown having a tool body 150 and a plurality of cutting elements or inserts 152. The cutting elements 152 may be disposed in pockets 154 formed in an end or region of the body 156. In some embodiments, the cutting elements may be removably coupled with the tool body 150 such as by a fastener 158. In some embodiments, the cutting elements 152 may be indexable relative to the tool body 150. Thus, for example, as one face 160A or edge of a given cutting element 152 becomes worn or damaged, the cutting element 152 may be rotated relative to the tool body 150 such that a new face or edge 160B may be presented to a workpiece for the cutting and removal of material therefrom. In some embodiments, the cutting elements 152 may be removably coupled with the body 150 using clamping mechanisms. In some embodiments, the cutting elements 152 may be coupled with the body 150 by brazing or other material joining techniques.

Various materials may be used in forming the body 150 of the cutting tool including various metals and metal alloys. In some embodiments, the body 150 may be formed of an aluminum or aluminum alloy material. Other materials that may be used in forming the tool body include, without limitation, steel and steel alloys (*e.g.* stainless steels), nickel and nickel alloys, titanium and titanium alloys, tungsten and tungsten alloys, tungsten carbide and associated alloys, and other metals.

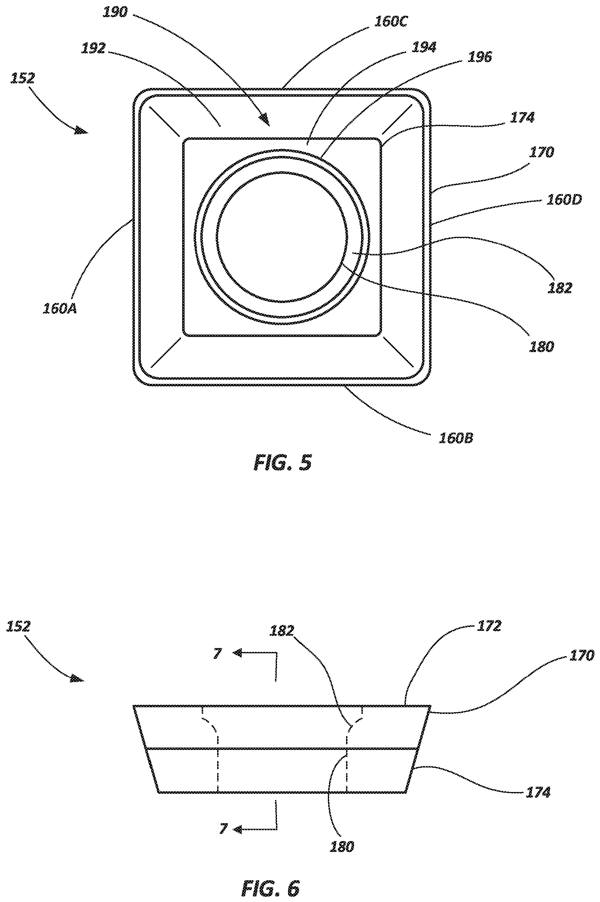

The cutting elements 152 are formed of polycrystalline diamond. For example, referring to FIGS. 5-7 the cutting elements 152 may include a superhard, superabrasive table 170 defining the working surface 172. In some embodiments, the cutting element 152 comprises a polycrystalline diamond compact ("PDC") including a polycrystalline diamond ("PCD") table to which the substrate 174 is bonded. In some embodiments, the interface between the table 170 and the substrate 174 may be substantially flat or planar. In other embodiments, the interface may be domed or curved. In other embodiments, the interface between the table 170 and the substrate 174 may include a plurality of raised features or recessed features (*e.g.,* dimples, grooves, ridges, etc.).

In some embodiments, the substrate 174 may comprise a cobalt-cemented tungsten carbide substrate bonded to the table 170. According to the invention, the table 170 includes a relatively "thick diamond" table which exhibits a thickness (*i.e.,* from the working surface 174 to the interface between the table 170 and the substrate 174) that is 3,8 x 10⁻³ m (0.15 inch) or greater, 5,08 x 10⁻³ m (0.2 inch) or greater or 7,62 x 10⁻³ m (0.15 inch) or greater.

In one embodiment, the table 170 exhibits a thickness between 3,8 x 10⁻³ m (0.15 inch) and 5,08 x 10⁻³ m (0.2 inch). In one embodiment, the table 170 exhibits a thickness between 5,08 x 10⁻³ m (0.2 inch) and 7,62 x 10⁻³ m (0.3 inch). Examples of forming relatively thick PDCs for use in bearings and in use of subterranean drilling may be found in U.S. Patent No. 9,080385.

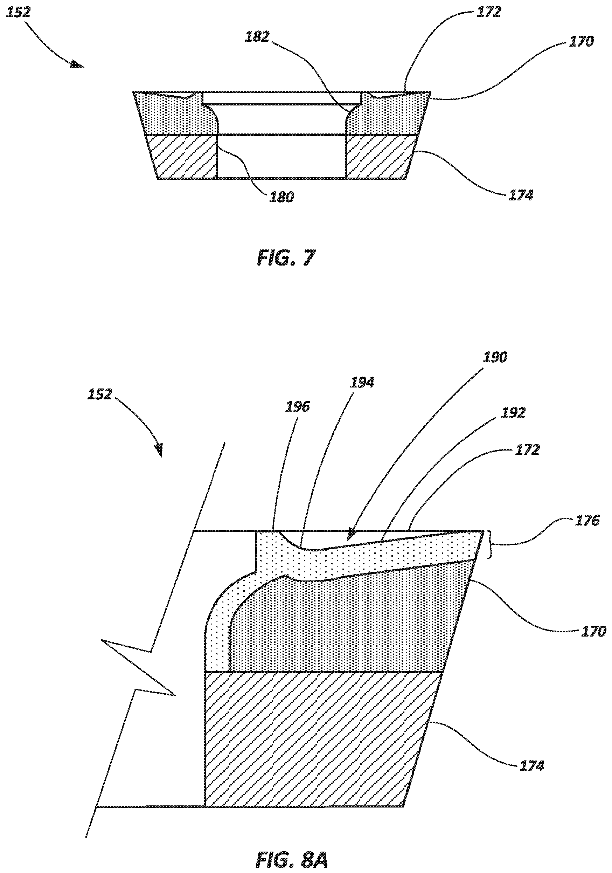

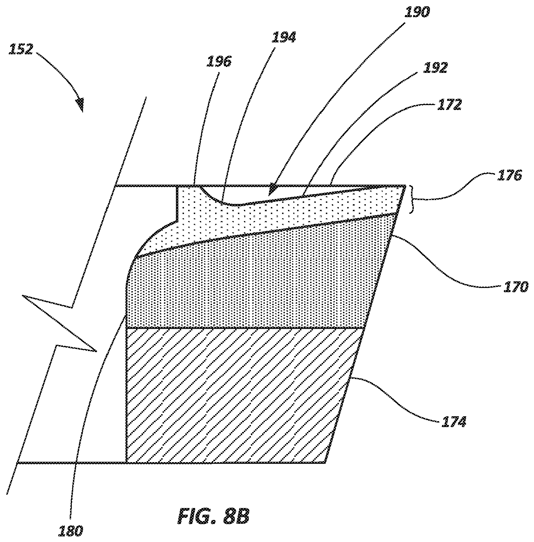

The PCD table 170 includes a plurality of directly bonded-together diamond grains exhibiting diamond-to-diamond bonding therebetween (e.g., sp3 bonding), which define a plurality of interstitial regions. A portion of the interstitial regions of the PCD table may include a metal-solvent catalyst or a metallic infiltrant disposed therein that is infiltrated from the substrate 174 or from another source during fabrication. For example, the metal-solvent catalyst or metallic infiltrant may be selected from iron, nickel, cobalt, and alloys of the foregoing. In some embodiments, the PCD table 170 may further include thermally-stable diamond in which the metal-solvent catalyst or metallic infiltrant has been partially or substantially completely depleted (e.g., region 176 shown in FIGS. 8A and 8B) from a selected surface or volume of the PCD table, such as via an acid leaching process. Thermally-stable PCD may also be sintered with one or more alkali metal catalysts. In some embodiments, the catalyst-depleted region 176 may exhibit a depth that is substantially conformal with an outer surface of the PCD table 170, such as shown in FIG. 8A and 8B. In other embodiments, the catalyst-depleted region 176 may generally extend a desired depth from a plane extending through the uppermost portions of the table 170 (*e.g.,* through the peripheral edges of the working surface 172 and/or through the upper surface of the lip 196 - see FIG. 8A). Thus, removal of the catalyst or infiltrant may be done prior to or after the forming of the structures and features (*e.g.,* chip breakers 190, opening 180, etc. as described hereinbelow). For example, FIG. 8B shows an embodiment where the removal of catalyst material does not extend substantially into the hole 180. This may be because of selective catalyst removal techniques (*e.g.,* masking), or it may be because the hole 180 was formed after catalyst removal.

In some embodiments, PDCs which may be used as the cutting elements 152 may be formed in an HPHT process. For example, diamond particles may be disposed adjacent to the substrate 174, and subjected to an HPHT process to sinter the diamond particles to form the PCD table and bond the PCD table to the substrate 122, thereby forming the PDC. The temperature of the HPHT process may be at least about 1000 °C (*e.g.*, about 1200 °C to about 1600 °C) and the cell pressure, or the pressure in the pressure-transmitting medium (*e.g.,* a refractory metal can, graphite structure, pyrophyllite, etc.), of the HPHT process may be at least 4.0 GPa (e.g., about 5.0 GPa to about 12 GPa or about 7.5 GPa to about 11 GPa) for a time sufficient to sinter the diamond particles.

In some embodiments, the diamond particles may exhibit an average particle size of about 50 µm or less, such as about 30 µm or less, about 20 µm or less, about 10 µm to about 20 µm, about 10 µm to about 18 µm, about 12 µm to about 18 µm, or about 15 µm to about 18 µm. In some embodiments, the average particle size of the diamond particles may be about 10 µm or less, such as about 2 µm to about 5 µm or submicron. In some embodiments, the diamond particles may exhibit multiple sizes and may comprise, for example, a relatively larger size and at least one relatively smaller size. As used herein, the phrases "relatively larger" and "relatively smaller" refer to particle sizes (by any suitable method) that differ by at least a factor of two (e.g., 30 µm and 15 µm). According to various embodiments, the mass of diamond particles may include a portion exhibiting a relatively larger size (e.g., 30 µm, 20 µm, 15 µm, 12 µm, 10 µm, 8 µm) and another portion exhibiting at least one relatively smaller size (e.g., 6 µm, 5 µm, 4 µm, 3 µm, 2 µm, 1 µm, 0.9 µm, 0.8 µm, 0.7 µm, 0.6 µm, 0.5 µm, less than 0.5 µm, 0.4 µm, 0.3 µm, 0.2 µm, 0.1 µm, less than 0.1 µm). For example, in one embodiment, the diamond particles may include a portion exhibiting a relatively larger size between about 10 µm and about 40 µm and another portion exhibiting a relatively smaller size between about 0.5 µm and 4 µm. In some embodiments, the diamond particles may comprise three or more different sizes (e.g., one relatively larger size and two or more relatively smaller sizes), without limitation. The PCD table so-formed after sintering may exhibit an average diamond grain size that is the same or similar to any of the foregoing diamond particle sizes and distributions. More details about diamond particle sizes and diamond particle size distributions that may be employed are disclosed in U.S. Patent No. 9,349149.

In some embodiments, the diamond grains of the resulting table 170 may exhibit an average grain size that is equal to or less than approximately 12 µm and include cobalt content of greater than about 7 weight percent (wt. %) cobalt. In some other embodiments, the diamond grains of the resulting table 170 may exhibit an average grain size that is equal to or greater than approximately 20 µm and include cobalt content of less than approximately 7 wt. %. In some embodiments, the diamond grains of the resulting table may exhibit an average grains size that is approximately 10 µm to approximately 20 µm.

In some embodiments, tables 170 may be formed as PCD tables at a pressure of at least about 7.5 GPa, may exhibit a coercivity of 115 Oe or more, a high-degree of diamond-to-diamond bonding, a specific magnetic saturation of about 15 G·cm³/g or less, and a metal-solvent catalyst content of about 7.5 wt. % or less. The PCD may include a plurality of diamond grains directly bonded together via diamond-to-diamond bonding to define a plurality of interstitial regions. At least a portion of the interstitial regions may be occupied by a metal-solvent catalyst, such as iron, nickel, cobalt, or alloys of any of the foregoing metals. For example, the metal-solvent catalyst may be a cobalt-based material including at least 50 wt. % cobalt, such as a cobalt alloy.

The metal-solvent catalyst that occupies the interstitial regions may be present in the PCD in an amount of about 7.5 wt. % or less. In some embodiments, the metal-solvent catalyst may be present in the PCD in an amount of about 3 wt. % to about 7.5 wt. %, such as about 3 wt. % to about 6 wt. %. In other embodiments, the metal-solvent catalyst content may be present in the PCD in an amount less than about 3 wt. %, such as about 1 wt. % to about 3 wt. % or a residual amount to about 1 wt. %. By maintaining the metal-solvent catalyst content below about 7.5 wt. %, the PCD may exhibit a desirable level of thermal stability.

Generally, as the sintering pressure that is used to form the PCD increases, the coercivity may increase and the magnetic saturation may decrease. The PCD defined collectively by the bonded diamond grains and the metal-solvent catalyst may exhibit a coercivity of about 115 Oe or more and a metal-solvent catalyst content of less than about 7.5 wt. % as indicated by a specific magnetic saturation of about 15 G·cm³/g or less. In a more detailed embodiment, the coercivity of the PCD may be about 115 Oe to about 250 Oe and the specific magnetic saturation of the PCD may be greater than 0 G·cm³/g to about 15 G·cm³/g. In an even more detailed embodiment, the coercivity of the PCD may be about 115 Oe to about 175 Oe and the specific magnetic saturation of the PCD may be about 5 G·cm³/g to about 15 G·cm³/g. In yet an even more detailed embodiment, the coercivity of the PCD may be about 155 Oe to about 175 Oe and the specific magnetic saturation of the PCD may be about 10 G·cm³/g to about 15 G·cm³/g. The specific permeability (*i.e.,* the ratio of specific magnetic saturation to coercivity) of the PCD may be about 0.10 or less, such as about 0.060 to about 0.090. Despite the average grain size of the bonded diamond grains being less than about 30 µm, the metal-solvent catalyst content in the PCD may be less than about 7.5 wt. % resulting in a desirable thermal stability.

In one embodiment, diamond particles having an average particle size of about 18 µm to about 20 µm are positioned adjacent to a cobalt-cemented tungsten carbide substrate and subjected to an HPHT process at a temperature of about 1390 °C to about 1430 °C and a cell pressure of about 7.8 GPa to about 8.5 GPa. The PCD so-formed as a PCD table bonded to the substrate may exhibit a coercivity of about 155 Oe to about 175 Oe, a specific magnetic saturation of about 10 G·cm³/g to about 15 G·cm³/g, and a cobalt content of about 5 wt. % to about 7.5 wt. %.

In one or more embodiments, a specific magnetic saturation constant for the metal-solvent catalyst in the PCD may be about 185 G·cm³/g to about 215 G·cm³/g. For example, the specific magnetic saturation constant for the metal-solvent catalyst in the PCD may be about 195 G·cm³/g to about 205 G·cm³/g. It is noted that the specific magnetic saturation constant for the metal-solvent catalyst in the PCD may be composition dependent.

Generally, as the sintering pressure is increased above 7.5 GPa, a wear resistance of the PCD so-formed may increase. For example, the Gᵣₐₜᵢₒ may be at least about 4.0x10⁶, such as about 5.0x10⁶ to about 15.0x10⁶ or, more particularly, about 8.0 x10⁶ to about 15.0 x10⁶. In some embodiments, the Gᵣₐₜᵢₒ may be at least about 30.0 x10⁶. The Gᵣₐₜᵢₒ is the ratio of the volume of workpiece cut (*e.g.,* between about 470 in³ of barre granite to about 940 in³ of barre granite) to the volume of PCD worn away during the cutting process. It is noted that while such a process may involve a so-called "granite log test," this process is still applicable for determining the Gᵣₐₜᵢₒ of the PCD even though the cutter may be intended for use in metal cutting processes rather than rock cutting or drilling.

The material characteristics discussed herein, as well as other characteristics that may be provided in a cutting element 152, including processes for measuring and determining such characteristics, as well as methods of making such cutting elements, are described in U.S. Patent No. 7,866,418, U.S. Patent No. 8,297,382, and U.S. Patent No. 9,315881.

In some embodiments, the table 170 may comprise high density polycrystalline diamond. For example, in some embodiments, the table 170 may comprise approximately 95 percent diamond by volume (vol. %) or greater. In some embodiments, the table 170 may comprise approximately 98 vol. % diamond or greater. In some embodiments, the table 170 may comprise approximately 99 vol. % diamond or greater. In other embodiments, the table may comprise polycrystalline diamond or relatively low diamond content. For example, in some embodiments, the table 170 may comprise less than 95 percent diamond by volume (vol. %).

In some embodiments, the table 170 may be integrally formed with the substrate 174 such as discussed above. In some other embodiments, the table 170 may be a pre-formed table that has been HPHT bonded to the substrate 174 in a second HPHT process after being initially formed in a first HPHT process. For example, the table 170 may be a pre-formed PCD table that has been leached to substantially completely remove the metal-solvent catalyst used in the manufacture thereof and subsequently HPHT bonded or brazed to the substrate 174 in a separate process.

The substrate 174 may be formed from any number of different materials, and may be integrally formed with, or otherwise bonded or connected to, the table 170. Materials suitable for the substrate 174 may include, without limitation, cemented carbides, such as tungsten carbide, titanium carbide, chromium carbide, niobium carbide, tantalum carbide, vanadium carbide, or combinations thereof cemented with iron, nickel, cobalt, or alloys thereof.

However, in some embodiments, the substrate 174 may be omitted and the cutting elements 152 includes a polycrystalline diamond body that has been leached to deplete the metal-solvent catalyst therefrom.

As discussed above, in some embodiments, the table 170 is leached to deplete a metal-solvent catalyst or a metallic infiltrant therefrom in order to enhance the thermal stability of the table 170. The PCD table 170 is leached to remove at least a portion of the metal-solvent catalyst, that was used to initially sinter the diamond grains to form a leached thermally-stable region 176, from a working region thereof to a selected depth. The leached thermally-stable region may extend inwardly from the working surface 174 to a selected depth. In an embodiment, the depth of the thermally-stable region may be about 50 µm to about 1,500 µm. More specifically, in some embodiments, the selected depth is about 50 µm to about 900 µm, about 200 µm to about 600 µm, or about 600 µm to about 1200 µm. The leaching may be performed in a suitable acid, such as aqua regia, nitric acid, hydrofluoric acid, or mixtures of the foregoing.

As depicted in FIGS. 3-7, the cutting elements 152 may be configured to exhibit a substantially square outer profile when viewed from above (*i.e.,* as seen specifically in FIG. 5). Such a geometry provides multiple cutting edges 160A-160D which may be indexed relative to a cutting tool body 150 for extended service of the cutting elements 152. However, it is noted that other shapes and outer profiles are contemplated including, for example, circular, curved, triangular, hexagonal, octagonal, and other regular or irregular polygons.

As seen in FIGS. 5 and 6, the cutting elements 152 also include an opening 180 formed in the table 170 and substrate 174 to accommodate a fastener for coupling of the cutting element 152 with a cutting tool body 150. The opening 180 may include a countersunk region 182 (or a counter bore, depending on the type of fastener being used) to enable a fastener to be positioned flush with or below the working surface 172 of the table 170 when the cutting element 152 is coupled with a cutting tool body 150.

Features for breaking chips of material that are being removed from the workpiece when engaged by the rotating cutting tool 104 are also provided in the cutting elements 152. As seen best in FIGS. 5 and 8, the cutting elements include formations or structures referred to as chip breakers 190. The chip breakers 190 include a declining ramped surface portion 192 formed within the table 170 extending radially inward from a location adjacent the outer periphery of the table 170. The chip breaker 190 further include a portion that is angled or curved, referred to as a return portion 194, that leads up to a protruding lip 196 positioned adjacent to and surrounding the opening 180. As material is removed from a workpiece, the removed material travels along the ramped surface portion 192 and then abruptly changes directions as it encounters the return portion 194, promoting the breaking of the removed material into smaller "chips." Breaking the material removed from a workpiece into smaller, discrete chips, instead of allowing the removed material to remain as long strings, helps to reduce potential interference of the removed material with the ongoing machining process.

Various methods may be employed to form the opening 180, countersunk region 182, chip breaker 190, or other geometric features, including processes such as laser machining and laser cutting. Some non-limiting methods of forming such features in the cutting element are described in U.S. Patent No. 9,089,900, U.S. Patent No. 9,062,505, and PCT Patent Application No. PCT/US2018/013069 (entitled ENERGY MACHINED POLYCRSTALLINE DIAMOND COMPACTS AND RELATED METHODS, filed on Jan. 10, 2018, corresponding to publication number WO 2018/147959 A1). Additionally, the cutting elements 152 may be subjected to other processes to obtain desired characteristics or features. For example, at least a portion of a surface of the table 170 may be polished (*e.g.,* at least a portion of a PCD surface may be polished) to a finish of approximately 508 x 10⁻⁹ m (20 micro inches (µ in)) root mean square (RMS). Examples of surface finishing processes and tables with various surface finishes are described in U.S. Patent Application No. 15/232,780, (entitled ATTACK INSERTS WITH DIFFERING SURFACE FINISHES, ASSEMBLIES, SYSTEMS INCLUDING SAME, AND RELATED METHODS, filed August 9, 2016, corresponding to publication number US 2017/043452 A1).

While the cutting elements 152 and the cutting tool 104 may be used in a variety of machining processes, and for machining of a variety of materials, it has been determined that use of cutting elements 152 having a PCD table 170 combined with a tool body 150 formed of a material comprising aluminum unexpectedly provides various benefits when machining a workpiece formed of titanium. While the exact mechanisms for improved efficiency and effectiveness of the machining of titanium are not entirely understood, it is believed that the use of an aluminum tool body may provide compliance, that such a configuration may provide enhanced thermal conductivity of the cutting tool, or some combination of the two characteristics may result in an enhanced performance of the machining process.

In some embodiments, the cutting elements may be beneficial in machining other thermal resistance materials. For example, in some embodiments, the cutting elements 152 of the present disclosure may provide advantages in machining materials having a thermal conductivity of less than approximately 50 watts per meter-Kelvin (W/m·K). In some embodiments, the cutting elements 152 of the present disclosure may be beneficial in machining materials having a thermal conductivity of less than approximately 30 W/m·K. In some embodiments, the cutting elements 152 of the present disclosure may be beneficial in machining materials having a thermal conductivity of less than approximately 20 W/m·K.

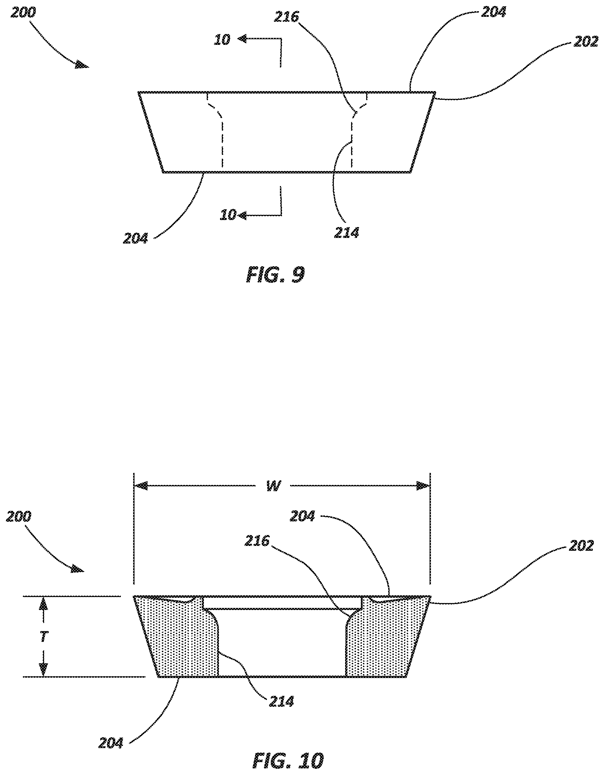

Referring now to FIGS. 9-11, a cutting element 200 according to another embodiment of the present disclosure is provided. The cutting element 200 may be formed of superhard, superabrasive materials. For example, the cutting element 200 includes polycrystalline diamond. As with previously described embodiments, the cutting element 200 includes a superhard, superabrasive table 202 defining the working surface 204. In some embodiments, the cutting element 200 may comprise a PCD table 202 with no substrate or other structure attached thereto. In other words, in some embodiments, as previously noted, the cutting element 200 may consist of, or it may consist essentially of a superhard, superabrasive table, such as a PCD table 202. In such an embodiment, the table may be initially formed with a substrate during an HPHT process (with the substrate providing a catalytic material such as previously described), and the substrate may be removed after the HPHT process. In other embodiments, the table 202 may be formed by mixing a catalytic material with diamond powder or otherwise providing a catalytic material prior to an HPHT process.

The table 202 includes a relatively "thick diamond" table which exhibits a thickness (*i.e.,* from the working surface 204 to the lower, opposing surface 206) that is 3,8 x 10⁻³ m (0.15 inch) or greater. In other embodiments, the table 202 exhibits a thickness of approximately 5,08 x 10⁻³ m (0.2 inch) or greater or 7,62 x 10⁻³ m (0.3 inch) or greater.

In one embodiment, the table 202 exhibits a thickness between 3,8 x 10⁻³ m (0.15 inch) and 5,08 x 10⁻³ m (0.2 inch). In one embodiment, the table 202 exhibits a thickness between approximately 5,08 x 10⁻³ m (0.2 inch) and 7,62 x 10⁻³ m (0.3 inch). In one embodiment, the table 202 exhibits a thickness between 7,62 x 10⁻³ m (0.3 inch) and 10,16 x 10⁻³ m (0.4 inch). In one embodiment, the table 202 exhibits a thickness between 10,16 x 10⁻³ m (0.4 inch) and 12,7 x 10⁻³ m (0.5 inch). In one embodiment, the table 202 exhibits a thickness between approximately 12,7 x 10⁻³ m (0.5 inch) and 15,24 x 10⁻³ m (0.6 inch). In one embodiment, the table 202 exhibits a thickness between 15,24 x 10⁻³ m (0.6 inch) and 17,78 x 10⁻³ m (0.7 inch). In one embodiment, the table 202 exhibits a thickness between 17,78 x 10⁻³ m (0.7 inch) and 20,32 x 10⁻³ m (0.8 inch). In one embodiment, the table 202 exhibits a thickness between 20,32 x 10⁻³ m (0.8 inch) and 22,86 x 10⁻³ m (0.9 inch). In one embodiment, the table 202 exhibits a thickness between 22,86 x 10⁻³ m (0.9 inch) and 25,4 x 10⁻³ m (1 inch). In one embodiment, the table 202 exhibits a thickness between 3,81 x 10⁻³ m (0.15 inch) and 7,62 x 10⁻³ m (0.3 inch).

As depicted in FIGS. 9-11, the cutting elements 200 may be configured to exhibit a substantially square outer profile when viewed from above (*i.e.,* as seen specifically in FIG. 5). Such a geometry provides multiple cutting edges which may be indexed relative to a cutting tool body 150 for extended service of the cutting elements 200. In one embodiment, the cutting element 200 may have a face that exhibits a substantially square profile that exhibits a width W of 12,7 x 10⁻³ m (0.5 inch) and 17,78 x 10⁻³ m (0.7 inch). In another embodiment, the width W may be 10,16 x 10⁻³ m (0.4 inch) and 20,32 x 10⁻³ m (0.8 inch). In another embodiment, the width W may be 7,62 x 10⁻³ m (0.3 inch) and 22,86 x 10⁻³ m (0.9 inch). In another embodiment, the width W may be 5,08 x 10⁻³ m (0.2 inch) and 19,05 x 10⁻³ m (0.75 inch). In another embodiment, the width W may be 19,05 x 10⁻³ m (0.75 inch) and 25,4 x 10⁻³ m (1 inch). In another embodiment, the width W may be 9,398 x 10⁻³ m (0.37 inch). In another embodiment, the width W may be 11,938 x 10⁻³ m (0.47 inch). In some embodiments, the square profile may include rounded or chamfered corners or transitions between sides.

As previously noted, other shapes and outer profiles are contemplated including, for example, circular, curved, triangular, rhombus, hexagonal, octagonal, and other regular or irregular polygons.

As seen in FIGS. 9 and 10, the cutting elements 200 also include an opening 214 formed in the table 202 to accommodate a fastener and/or a clamping element for coupling of the cutting element 200 with a cutting tool body 150. The opening 214 may include a countersunk region 216 (or a counter bore, depending on the type of fastener being used) to enable a fastener and/or clamping element to be positioned flush with or below the working surface 204 of the table 202 when the cutting element 200 is coupled with a cutting tool body 150.

Features for breaking chips of material that are being removed from the workpiece when engaged by the rotating cutting tool are also provided in the cutting elements 200. The cutting elements include formations or structures referred to as chip breakers as has been previously described.

The table 202 may be formed in accordance with methods and techniques previously described herein and may include features and characteristics similar to those described herein with respect to other embodiments.

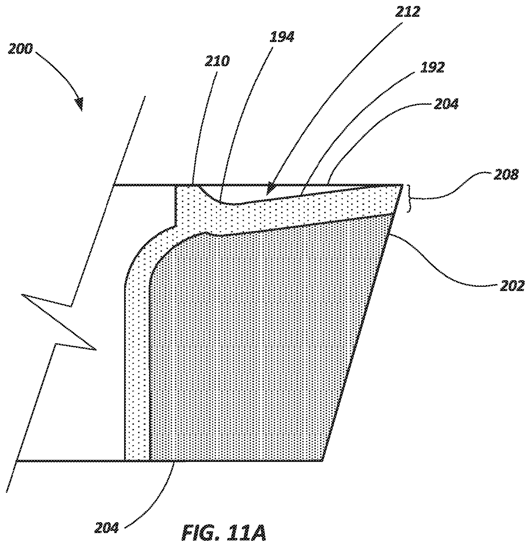

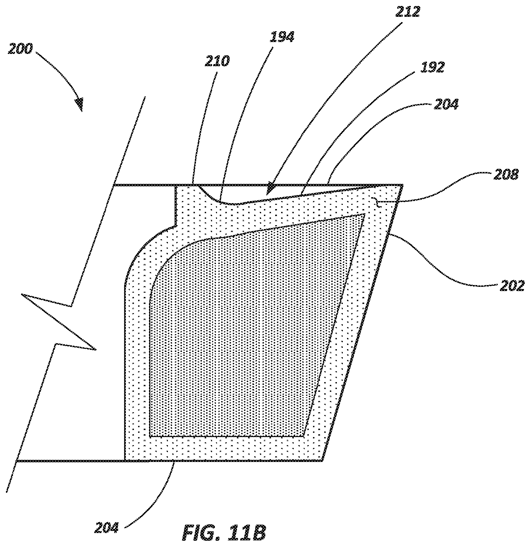

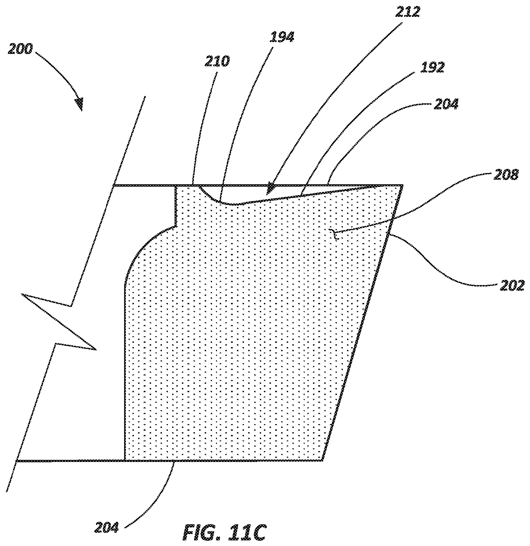

The PCD table 202 include a plurality of directly bonded-together diamond grains exhibiting diamond-to-diamond bonding therebetween (e.g., sp3 bonding), which define a plurality of interstitial regions. A portion of the interstitial regions of the PCD table may include a metal-solvent catalyst or a metallic infiltrant disposed therein that is infiltrated from a substrate or from another source during fabrication. For example, the metal-solvent catalyst or metallic infiltrant may be selected from iron, nickel, cobalt, and alloys of the foregoing. In some embodiments, the PCD table 202 may further include thermally-stable diamond in which the metal-solvent catalyst or metallic infiltrant has been partially or substantially completely depleted (e.g., region 208 shown in FIGS. 11A-11C) from a selected surface or volume of the PCD table, such as via an acid leaching process. Thermally-stable PCD may also be sintered with one or more alkali metal catalysts. In some embodiments, a catalyst-depleted region 208 may exhibit a depth that is substantially conformal with an outer surface of the PCD table 202, such as shown in FIGS. 11A and 11B. In other embodiments, the catalyst-depleted region 208 may generally extend a desired depth from a plane extending through the uppermost portions of the table 202 (*e.g.,* through the peripheral edges of the working surface 204 and/or through the upper surface of the lip 210). Thus, removal of the catalyst or infiltrant may be done prior to or after the forming of the structures and features (*e.g.,* chip breakers 212, opening 214, etc.). As previously noted, in some embodiments, catalyst material may be removed from substantially the entire PCD table 202, such as shown in FIG. 11C.

As discussed above, in some embodiments, the table 202 is leached to deplete a metal-solvent catalyst or a metallic infiltrant therefrom in order to enhance the thermal stability of the table 202. The PCD table 202 is leached to remove at least a portion of the metal-solvent catalyst that was used to initially sinter the diamond grains to form a leached thermally-stable region 208, from a working region thereof to a selected depth. The leached thermally-stable region may extend inwardly from the working surface 206 to a selected depth. In an embodiment, the depth of the thermally-stable region may be about 30 µm to about 1,500 µm. More specifically, in some embodiments, the selected depth is about 50 µm to about 900 µm, about 200 µm to about 600 µm, or about 600 µm to about 1200 µm. The leaching may be performed in a suitable acid, such as aqua regia, nitric acid, hydrofluoric acid, or mixtures of the foregoing.

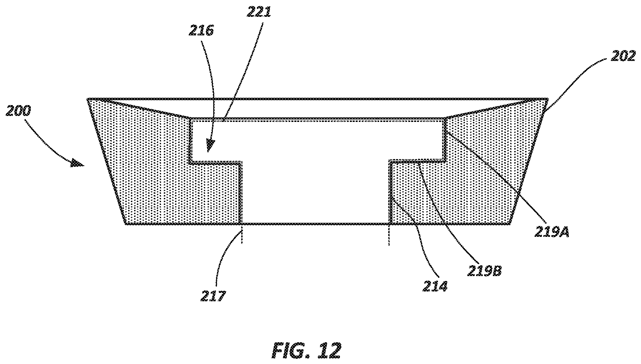

Referring briefly to FIG. 12, a cutting element 200 is shown with a different cross-sectional profile. The cutting element 200 may include features and aspects such as described hereinabove with respect to other embodiments. For example, the cutting element 200 includes an opening 214 formed in a table 202 to accommodate a fastener and/or a clamping element for coupling of the cutting element 200 with a cutting tool body 150. The opening 214 may include a countersunk region 216 (or a counter bore, depending on the type of fastener 217 being used) to enable a fastener and/or clamping element to be positioned flush with or below the working surface 204 of the table 202 when the cutting element 200 is coupled with a cutting tool body 150. In the embodiment shown in FIG. 12, the countersunk region 216 includes a counterbore which may be formed, in the profile shown, to provide a wall 219A and a floor 219B formed substantially at right angles relative to each other, and configured to accept the head 221 of a fastener 217. The fastener 217, including the head 221 of the fastener, may be configured to, at least in part, be substantially congruent with, conformal with, or otherwise correspond in size and shape with the counterbore or countersunk region. For example, as shown, the cross-sectional profile of the head 221 of the fastener 217 correlates or is congruent with the cross-sectional profile of the counterbore region. In other embodiments, for example, both the head of a fastener and the countersunk region by be tapered, stepped, or a combination of geometric shapes or features in a corresponding and at least partially conformal manner.

Features for breaking chips of material that are being removed from the workpiece when engaged by the rotating cutting tool 100 are also provided in the cutting element 200. The cutting element 200 includes formations or structures referred to as chip breakers as has been previously described.

The table 202 may be formed in accordance with methods and techniques previously described herein and may include features and characteristics similar to those described herein with respect to other embodiments.

The PCD table 202 includes a plurality of directly bonded-together diamond grains exhibiting diamond-to-diamond bonding therebetween (e.g., sp3 bonding), which define a plurality of interstitial regions. A portion of the interstitial regions of the PCD table may include a metal-solvent catalyst or a metallic infiltrant disposed therein that is infiltrated from a substrate or from another source during fabrication. For example, the metal-solvent catalyst or metallic infiltrant may be selected from iron, nickel, cobalt, and alloys of the foregoing. In some embodiments, the PCD table 202 may further include thermally-stable diamond in which the metal-solvent catalyst or metallic infiltrant has been partially or substantially completely depleted from a selected surface or volume of the PCD table, such as via an acid leaching process. Locations, sizes, depths and configurations of catalyst depleted areas may be formed similar to those described above with respect to other embodiments including removal of catalyst material from substantially the entire table 202.

While various aspects and embodiments have been disclosed herein, other aspects and embodiments are contemplated. The various aspects and embodiments disclosed herein are for purposes of illustration and are not intended to be limiting. Additionally, the words "including," "having," and variants thereof (*e.g.,* "includes" and "has") as used herein, including the claims, shall have the same meaning as the word "comprising" and variants thereof (*e.g.,* "comprise" and "comprises").

## Claims

1. A cutting tool (104) comprising:
a body (150);
at least one cutting element (152) associated with the body (150), the at least one cutting element (152) comprising a superhard table (170) comprising polycrystalline diamond, wherein the superhard table (170) includes a plurality of diamond grains exhibiting diamond-to-diamond bonding therebetween, with a metal-solvent catalyst infiltrating at least some interstitial spaces between the diamond grains, and wherein the superhard table (170) has a region (176) where the metal-solvent catalyst is depleted from interstitial spaces between the diamond grains, with the region (176) forming a chip breaking feature (190) having a declining ramped surface portion (192) formed within the superhard table (170),
**characterized in that**:
the superhard table (170) exhibits a thickness of at least 3.8 x 10⁻³ m (0.15 inches);
the declining ramped surface portion (192) formed within the superhard table (170) extends radially inward from an outer periphery of the superhard table (170) which defines a cutting edge (160A); and
the chip breaking feature (190) has an angled or curved return portion (194) that leads up to a protruding lip (196) positioned adjacent to and surrounding an opening (180) formed in the superhard table (170) for accommodating a fastener to couple the cutting element (152) to the body (150), with the angled or curved return portion (194) connecting the declining ramped surface portion (192) to the protruding lip (196).

2. The cutting tool (104) of claim 1, wherein the superhard table (170) includes at least 95 volume percent of polycrystalline diamond.

3. The cutting tool (104) of claim 1, wherein the superhard table (170) includes at least 98 volume percent of polycrystalline diamond.

4. The cutting tool (104) of claim 1, wherein the superhard table (170) is not bonded with a substrate.

5. The cutting tool (104) of claim 1, wherein the metal-solvent catalyst comprises cobalt.

6. The cutting tool (104) of claim 1, wherein the region (176) where the metal-solvent catalyst is depleted from interstitial spaces between the diamond grains includes all of the superhard table.

7. The cutting tool (104) of claim 1, wherein the superhard table (170) exhibits a thickness of greater than 7.6 x 10⁻³ m (0.3 inches).

8. The cutting tool (104) of claim 1, wherein the body (150) comprises aluminum.

9. A method of removing material from a workpiece, the method comprising:
providing a cutting tool (104), the cutting tool (104) comprising:
a body (150), and
at least one cutting element (152) associated with the body (150), the at least one cutting element (152) comprising a superhard table (170) comprising polycrystalline wherein the superhard table (170) includes a plurality of diamond grains exhibiting diamond-to-diamond bonding therebetween, with a metal-solvent catalyst infiltrating at least some interstitial spaces between the diamond grains, and wherein the superhard table (170) has a region (176) where the metal-solvent catalyst is depleted from interstitial spaces between the diamond grains, with the region (176) forming a chip breaking feature (190) having a declining ramped surface portion (192) formed within the superhard table (170) **characterized in that**:
the superhard table (170) exhibits a thickness of at least 3,8 x 10⁻³ m (0.15 inches); the declining ramped surface portion (192) formed within the superhard table (170) extends radially inward from an outer periphery of the superhard table (170) which defines a cutting edge (160A); and the chip breaking feature (190) has an angled or curved return portion (194) that leads up to a protruding lip (196) positioned adjacent to and surrounding an opening (180) formed in the superhard table (170) for accomodating a fastener to couple the cutting element (152) to the body (150), with the angled or curved return portion (194) connecting the declining ramped surface portion (192) to the protruding lip (196);
rotating the cutting tool (104) about an axis;
engaging a workpiece with rotating cutting tool (104).

10. The method according to claim 9, wherein providing the cutting element (152) comprising a superhard table includes sintering a volume of diamond particles at high-pressure, high-temperature (HPHT) to form the plurality of diamond grains exhibiting diamond-to-diamond bonding therebetween, wherein sintering a volume of diamond particles includes infiltrating at least some interstitial spaces between the diamond grains with the metal-solvent catalyst, and further comprising forming the region in the table by removing at least some of the metal-solvent catalyst from interstitial spaces.

## Patentansprüche

1. Schneidwerkzeug (104), umfassend:
einen Körper (150);
mindestens ein dem Körper (150) zugeordnetes Schneidelement (152), wobei das mindestens eine Schneidelement (152) einen superharten Tisch (170) umfasst, der polykristallinen Diamant umfasst, wobei der superharte Tisch (170) eine Vielzahl von Diamantkörnern beinhaltet, die eine Diamant-zu-Diamant-Bindung dazwischen an den Tag legen, wobei ein Metall-Lösungsmittel-Katalysator mindestens einen Teil der Zwischenräume zwischen den Diamantkörnern durchdringt, und wobei der superharte Tisch (170) eine Region (176) aufweist, in welcher der Metall-Lösungsmittel-Katalysator aus den Zwischenräumen zwischen den Diamantkörnern aufgebraucht ist, wobei die Region (176) ein Spanbrechmerkmal (190) bildet, das einen abfallenden Rampenflächenabschnitt (192) aufweist, der innerhalb des superharten Tisches (170) gebildet ist,
**dadurch gekennzeichnet, dass**:
der superharte Tisch (170) eine Dicke von mindestens 3,8 x 10⁻³ m (0,15 Zoll) an den Tag legt;
sich der abfallende Rampenflächenabschnitt (192), der innerhalb des superharten Tisches (170) gebildet ist, von einem Außenumfang des superharten Tisches (170), der eine Schneidkante (160A) definiert, radial nach innen erstreckt; und
das Spanbrechmerkmal (190) einen abgewinkelten oder gekrümmten Rückstellabschnitt (194) aufweist, der nach oben zu einer vorstehenden Lippe (196) führt, die benachbart zu einer Öffnung (180), die in dem superharten Tisch (170) gebildet ist, positioniert ist und diese umgibt, um ein Befestigungsmittel aufzunehmen, um das Schneidelement (152) an den Körper (150) zu koppeln, wobei der abgewinkelte oder gekrümmte Rückstellabschnitt (194) den abfallenden Rampenflächenabschnitt (192) mit der vorstehenden Lippe (196) verbindet.

2. Schneidwerkzeug (104) nach Anspruch 1, wobei der superharte Tisch (170) mindestens 95 Volumenprozent polykristallinen Diamanten beinhaltet.

3. Schneidwerkzeug (104) nach Anspruch 1, wobei der superharte Tisch (170) mindestens 98 Volumenprozent polykristallinen Diamanten beinhaltet.

4. Schneidwerkzeug (104) nach Anspruch 1, wobei der superharte Tisch (170) nicht an ein Substrat gebunden ist.

5. Schneidwerkzeug (104) nach Anspruch 1, wobei der Metall-Lösungsmittel-Katalysator Kobalt umfasst.

6. Schneidwerkzeug (104) nach Anspruch 1, wobei die Region (176), in welcher der Metall-Lösungsmittel-Katalysator aus den Zwischenräumen zwischen den Diamantkörnern aufgebraucht ist, den gesamten superharten Tisch beinhaltet.

7. Schneidwerkzeug (104) nach Anspruch 1, wobei der superharte Tisch (170) eine Dicke von mehr als 7,6 x 10⁻³ m (0,3 Zoll) an den Tag legt.

8. Schneidwerkzeug (104) nach Anspruch 1, wobei der Körper (150) Aluminium umfasst.

9. Verfahren zum Entfernen von Material von einem Werkstück, wobei das Verfahren Folgendes umfasst:
Bereitstellen eines Schneidwerkzeugs (104), wobei das Schneidwerkzeug (104) Folgendes umfasst:
ein Körper (150), und
mindestens ein dem Körper (150) zugeordnetes Schneidelement (152), wobei das mindestens eine Schneidelement (152) einen superharten Tisch (170) umfasst, der Polykristallin umfasst, wobei der superharte Tisch (170) eine Vielzahl von Diamantkörnern beinhaltet, die eine Diamant-zu-Diamant-Bindung dazwischen an den Tag legen, wobei ein Metall-Lösungsmittel-Katalysator mindestens einen Teil der Zwischenräume zwischen den Diamantkörnern durchdringt, und wobei der superharte Tisch (170) eine Region (176) aufweist, in welcher der Metall-Lösungsmittel-Katalysator aus den Zwischenräumen zwischen den Diamantkörnern aufgebraucht ist, wobei die Region (176) ein Spanbrechmerkmal (190) bildet, das einen abfallenden Rampenflächenabschnitt (192) aufweist, der innerhalb des superharten Tisches (170) gebildet ist, **dadurch gekennzeichnet, dass**:
der superharte Tisch (170) eine Dicke von mindestens 3,8 x 10⁻³ m (0,15 Zoll) an den Tag legt; sich der abfallende Rampenflächenabschnitt (192), der innerhalb des superharten Tisches (170) gebildet ist, von einem Außenumfang des superharten Tisches (170), der eine Schneidkante (160A) definiert, radial nach innen erstreckt; und das Spanbrechmerkmal (190) einen abgewinkelten oder gekrümmten Rückstellabschnitt (194) aufweist, der nach oben zu einer vorstehenden Lippe (196) führt, die benachbart zu einer Öffnung (180), die in dem superharten Tisch (170) gebildet ist, positioniert ist und diese umgibt, um ein Befestigungsmittel aufzunehmen, um das Schneidelement (152) an den Körper (150) zu koppeln, wobei der abgewinkelte oder gekrümmte Rückstellabschnitt (194) den abfallenden Rampenflächenabschnitt (192) mit der vorstehenden Lippe (196) verbindet;
Drehen des Schneidwerkzeugs (104) um eine Achse;
Ineingriffbringen eines Werkstücks mit einem sich drehenden Schneidwerkzeug (104).

10. Verfahren gemäß Anspruch 9, wobei das Bereitstellen des Schneidelements (152), das einen superharten Tisch umfasst, Sintern eines Volumens von Diamantpartikeln bei Hochdruck-Hochtemperatur (HPHT) beinhaltet, um die Vielzahl von Diamantkörnern zu bilden, die eine Diamant-zu-Diamant-Bindung dazwischen an den Tag legen, wobei das Sintern eines Volumens von Diamantpartikeln Durchdringen von mindestens einem Teil der Zwischenräume zwischen den Diamantkörnern mit dem Metall-Lösungsmittel-Katalysator beinhaltet, und ferner umfassend Bilden der Region in dem Tisch durch Entfernen von mindestens einem Teil des Metall-Lösungsmittel-Katalysators aus den Zwischenräumen.

## Revendications

1. Outil de coupe (104) comprenant :
un corps (150) ;
au moins un élément de coupe (152) associé au corps (150), l'au moins un élément de coupe (152) comprenant une table superdure (170) comprenant du diamant polycristallin, dans lequel la table superdure (170) comprend une pluralité de grains de diamant montrant une liaison de diamant à diamant entre eux, un catalyseur métal-solvant infiltrant au moins certains espaces interstitiels entre les grains de diamant, et dans lequel la table superdure (170) présente une région (176) où le catalyseur métal-solvant est appauvri en espaces interstitiels entre les grains de diamant, la région (176) formant un élément de rupture de copeaux (190) présentant une partie de surface inclinée décroissante (192) formée à l'intérieur de la table superdure (170),
**caractérisé en ce que** :
la table superdure (170) montre une épaisseur d'au moins 3,8 × 10⁻³ m (0,15 pouce) ;
la partie de surface inclinée décroissante (192) formée à l'intérieur de la table superdure (170) s'étend radialement vers l'intérieur à partir d'une périphérie extérieure de la table superdure (170) qui définit un bord coupant (160A) ; et
l'élément de rupture de copeaux (190) présente une partie de retour anguleuse ou incurvée (194) qui mène à une lèvre saillante (196) positionnée adjacente à, et entourant, une ouverture (180) formée dans la table superdure (170) pour recevoir un élément de fixation pour coupler l'élément de coupe (152) au corps (150), la partie de retour anguleuse ou incurvée (194) reliant la partie de surface inclinée décroissante (192) à la lèvre saillante (196).

2. Outil de coupe (104) de la revendication 1, dans lequel la table superdure (170) comprend au moins 95 pour cent en volume de diamant polycristallin.

3. Outil de coupe (104) de la revendication 1, dans lequel la table superdure (170) comprend au moins 98 pour cent en volume de diamant polycristallin.

4. Outil de coupe (104) de la revendication 1, dans lequel la table superdure (170) n'est pas liée à un substrat.

5. Outil de coupe (104) de la revendication 1, dans lequel le catalyseur métal-solvant comprend du cobalt.

6. Outil de coupe (104) de la revendication 1, dans lequel la région (176) où le catalyseur métal-solvant est appauvri en espaces interstitiels entre les grains de diamant comprend la totalité de la table superdure.

7. Outil de coupe (104) de la revendication 1, dans lequel la table superdure (170) montre une épaisseur supérieure à 7,6 × 10⁻³ m (0,3 pouce).

8. Outil de coupe (104) de la revendication 1, dans lequel le corps (150) comprend de l'aluminium.

9. Procédé de retrait de matière d'une pièce à usiner, le procédé comprenant :
la fourniture d'un outil de coupe (104), l'outil de coupe (104) comprenant :
un corps (150), et
au moins un élément de coupe (152) associé au corps (150), l'au moins un élément de coupe (152) comprenant une table superdure (170) comprenant du polycristal
dans lequel la table superdure (170) comprend une pluralité de grains de diamant montrant une liaison de diamant à diamant entre eux, un catalyseur métal-solvant infiltrant au moins certains espaces interstitiels entre les grains de diamant, et dans lequel la table superdure (170) présente une région (176) où le catalyseur métal-solvant est appauvri en espaces interstitiels entre les grains de diamant, la région (176) formant un élément de rupture de copeaux (190) présentant une partie de surface inclinée décroissante (192) formée à l'intérieur de la table superdure (170), **caractérisé en ce que** :
la table superdure (170) montre une épaisseur d'au moins 3,8 × 10⁻³ m (0,15 pouce) ; la partie de surface inclinée décroissante (192) formée à l'intérieur de la table superdure (170) s'étend radialement vers l'intérieur à partir d'une périphérie extérieure de la table superdure (170) qui définit un bord coupant (160A) ; et l'élément de rupture de copeaux (190) présente une partie de retour anguleuse ou incurvée (194) qui mène à une lèvre saillante (196) positionnée adjacente à, et entourant, une ouverture (180) formée dans la table superdure (170) pour recevoir un élément de fixation pour coupler l'élément de coupe (152) au corps (150), la partie de retour anguleuse ou incurvée (194) reliant la partie de surface inclinée décroissante (192) à la lèvre saillante (196) ;
la rotation de l'outil de coupe (104) autour d'un axe ;
la mise en prise d'une pièce à usiner avec un outil de coupe rotatif (104).

10. Procédé selon la revendication 9, dans lequel la fourniture de l'élément de coupe (152) comprenant une table superdure comprend le frittage d'un volume de particules de diamant à haute pression, haute température (HPHT) pour former la pluralité de grains de diamant montrant une liaison de diamant à diamant entre eux, dans lequel le frittage d'un volume de particules de diamant comprend l'infiltration d'au moins certains espaces interstitiels entre les grains de diamant avec le catalyseur métal-solvant, et comprenant en outre la formation de la région dans la table en retirant au moins une partie du catalyseur métal-solvant des espaces interstitiels.
